**Europäisches Patentamt**

**European Patent Office**

**Office européen des brevets**

(11) Veröffentlichungsnummer: **0 612 689 A1**

# EUROPÄISCHE PATENTANMELDUNG

(21) Anmeldenummer: **94101789.9**

(22) Anmeldetag: **07.02.94**

(51) Int. Cl.5: **C01B 31/20**, B01D 53/36, B01J 23/89

(30) Priorität: **22.02.93 DE 4305386**

(43) Veröffentlichungstag der Anmeldung:
**31.08.94 Patentblatt 94/35**

(84) Benannte Vertragsstaaten:
**AT BE CH DE DK ES FR GB IT LI NL SE**

(71) Anmelder: **LEUNA-WERKE AG**
**Gruppe Patente**
**D-06236 Leuna (DE)**

(72) Erfinder: **Szargan, Peter, Dr.**
**Barlachring 21**
**D-06124 Halle (DE)**
Erfinder: **Meye, Horst, Dr.**
**Stolberger Strasse 14**
**D-06124 Halle (DE)**
Erfinder: **Wittke, Harald, Dr.-Ing.**
**Barlachring 48**
**D-06124 Halle (DE)**
Erfinder: **Poerschke, Jürgen, Dr.**
**Aralienweg 12**
**D-06122 Halle (DE)**
Erfinder: **Schmidt, Jürgen, Dr.-Ing.**
**Scheibnerstrasse 17**
**D-06217 Merseburg (DE)**
Erfinder: **Prautsch, Ines, Dr.-Ing.**
**Bebelstrasse 41**
**D-06679 Hohenmölsen (DE)**

(54) **Katalysator und Verfahren zur Reinigung von Kohlendioxid.**

(57) Die Erfindung betrifft einen Katalysator und ein Verfahren zur Reinigung von Kohlendioxid, wie es in der Reinigungsstufe der Synthesegaserzeugung aus schweren Erdölrückständen anfällt, für dessen Verwendung in der Lebensmittelindustrie.

Der erfindungsgemäße Katalysator besteht aus $\alpha$-Aluminiumoxid mit einer spezifischen Oberfläche < 50 $m^2/g$, das Platin in einer Menge < 0,2 Masse-% und ggf. weitere Metallverbindungen der 8. Nebengruppe oder Kupfer in einer Menge < 0,1 Masse-%, in einer Schichtdicke des Katalysators von 100 $\mu$m peripher auf >0,5 Masse-% angereichert, enthält.

Das Verfahren zur Reinigung des Kohlendioxides wird bei Temperaturen zwischen 450 und 540 °C und Belastungen von 5000 v/vh an dem erfindungsgemäßen Katalysator durchgeführt.

EP 0 612 689 A1

Die Erfindung betrifft einen Katalysator und ein Verfahren zur Entfernung von organischen Verunreinigungen aus Kohlendioxid für die Verwendung in der Lebensmittelindustrie.

Kohlendioxid kommt in sogenannten Säuerlingen oder Gasquellen vor, ist in den Gasen von chemischen Prozessen zur Herstellung von Synthesegas oder Wasserstoff sowie in Rauchgasen in großen Mengen enthalten und entsteht bei der Gärung. Kohlendioxid hoher Konzentration findet vielseitig Anwendung, z. B. als Löschmittel, Kältemittel, in der chemischen Industrie für spezielle Synthesen, aber auch in der Lebensmittelindustrie. Auf Grund der z. T. großen Anteile an Verunreinigungen läßt sich die anfallende bzw. angereicherte Kohlensäure nicht für alle Verfahren anwenden. Sie bedarf einer Reinigung. Extreme Anforderungen an die Reinheit der Kohlensäure werden für Anwendungsfälle in der Lebensmittelindustrie gestellt. Deshalb erfolgte bisher die Herstellung von Kohlensäure für die Getränkeproduktion aus der Aufarbeitung natürlicher Kohlensäure-Vorkommen, wie Mineralquellen oder der Gärung.

Unreine Kohlensäure aus natürlichen Aufkommen wird durch Destillation sowie durch Adsorption an Aktivkohle und Silicagel gereinigt. Das so gereinigte $CO_2$ enthält nur noch Spuren von Verunreinigungen und kann für die Getränkeindustrie verwendet werden. Verunreinigungen der Kohlensäure aus der fermentativen Produktion sind wasserlösliche flüchtige organische Verbindungen, wie Alkohole, Aldehyde und Ketone, die durch eine Behandlung mit kaliumpermanganathaltigem Wasser entfernt werden.

Wesentlich schwieriger ist die Reinigung der Kohlensäure, die als Nebenprodukt aus der Synthesegaserzeugung gewonnen wird.

Eine Möglichkeit besteht in der Trennung der leichten Kohlenwasserstoffe aus dem $CO_2$ durch Rektifikation (JP 76 122 693, FP 1361 238). Dabei verbleiben jedoch Reste an Methan im $CO_2$. Die Entfernung organischer Schwefelverbindungen erfolgt durch Adsorption an A-Kohlen.

Auch Kohlenwasserstoffe und niedere Aldehyde werden durch Adsorption an A-Kohlen aus Kohlendioxid entfernt (DD 297 076).

Weitere Verfahren wenden die Oxidation der organischen Bestandteile an einem Katalysator an.

Neben Nichtedelmetallkatalysatoren, wie Chromoxid und Manganoxid auf $\gamma$-Tonerde (SU 508 258) und Kupferoxid auf einem Magnesiumsilikatträger (J. Appl. Sci. Res. 19 (1968), 3-4), werden auch Edelmetallkatalysatoren verwendet.

Aus der DD 240 672 ist bereits ein Verfahren zur Reinigung von Kohlendioxid durch katalytische Oxidation mit Luft oder Sauerstoff bekannt, bei dem ein Katalysator eingesetzt wird, der als Träger $\gamma$-Aluminiumoxid oder ein silikathaltiges Aluminiumoxid, mit einer spezifischen Oberfläche von $\geq 250$ m²/g, einem Porenvolumen $\geq 0,6$ m³/g und einem Verhältnis von geometrischer Oberfläche zu Volumen von 2 : 1 bis 8 : 1, hat und als Aktivkomponente 0,05 bis 5 Masse-%, vorzugsweise 0,1 bis 0,3 Masse-% Palladium und/oder Platin enthält.

Mit diesem Katalysator erfolgt vorwiegend die Entfernung von Methanol und Benzen, jedoch nur bis zur Nachweisgrenze von 5 Vol.-ppm bzw. 2 Vol.-ppm. Werte von weniger als 1 mg/kg, wie sie derzeit für die sog. Cola-Qualität gefordert werden, werden nicht erreicht.

Außerdem ist es mit diesem Verfahren und Katalysator nicht möglich, unter den beschriebenen Bedingungen die gesättigten Kohlenwasserstoffe wirtschaftlich zu entfernen. Weitere Verfahrensstufen, insbesondere gesonderte Waschstufen, sind erforderlich.

Das Ziel der Erfindung bestand somit darin, einen hochaktiven, thermisch stabilen Katalysator für den Einsatz zur Reinigung von Kohlendioxid, wie es in der Reinigungsstufe der Synthesegaserzeugung aus schweren Erdölrückständen anfällt, zu entwickeln, mit dem es mit geringstem ökonomischen Aufwand gelingt, alle organischen Verbindungen und anderen Verunreinigungen soweit zu entfernen, daß das Kohlendioxid in der Lebensmittelindustrie und anderen Anwendungsgebieten einsetzbar ist. Insbesondere soll das im Kohlendioxid enthaltene Methanol auf unter 1 ppm entfernt und der Gehalt an gesättigten Kohlenwasserstoffen um mehr als 90 % gesenkt werden.

Diese Aufgabe wird durch einen Katalysator gelöst, dessen Trägermaterial $\alpha$-Aluminiumoxid mit einer spezifischen Oberfläche kleiner als 50 m²/g ist und der Platin in einer Menge < 0,2 Masse-% und ggf. weitere Schwermetalle der 8. Nebengruppe oder Kupfer in einer Menge jeweils < 0,1 Masse-%, peripher in einer Schichtdicke von 100 $\mu$m auf > 0,5 Masse-% angereichert, enthält.

Die Oberflächenanreicherung des Platins bzw. aller Aktivkomponenten, - gemessen mittels Rasterelektronenmikroskopie - beträgt über 90 % des Gesamtgehaltes dieser, d. h. in den Schichten unterhalb 100 $\mu$m befinden sich maximal noch 10 % des im Katalysator enthaltenen Platins bzw. aller Aktivkomponenten. Die Oberflächenanreicherung kann auf bis zu 4 Masse-%, bezogen auf die Katalysatormasse in der 100 $\mu$m-Schicht, erfolgen und wird durch Fällen aus einer entsprechenden Metallsalzlösung, beim Platin aus einer Hexachloroplatinsäure, im pH-Bereich von 6 bis 8 erzielt. Infolge dieser hohen Oberflächenanreicherung ist es möglich, trotz niedrigen Platingehaltes, der zweckmäßigerweise nur bei 0,1 Masse-% gewählt wird, eine wirtschaftliche Reaktionsgeschwindigkeit zu erreichen.

Als Trägermaterial für den Katalysator wird bei vergleichbaren Prozessen üblicherweise $\gamma$-Aluminium-oxid verwendet, das über eine hohe spezifische Oberfläche verfügt. Es war daher überraschend, daß $\alpha$-Aluminiumoxid mit der niedrigen spezifischen Oberfläche von < 50 $m^2$/g, für diesen Zweck hervorragend geeignet ist. Vorzugsweise wird für den erfindungsgemäßen Katalysator ein $\alpha$-Aluminiumoxid verwendet, das eine spezifische Oberfläche von 5 bis 25$m^2$/g (BET-Oberfläche) aufweist mit einer Makroporosität > 50 %.

Als Aktivkomponenten kann der Katalysator außer Platin auch noch Palladium in einer Konzentration < 0,1 Masse-% und/oder Kupfer oder ein Element der 8. Nebengruppe, insbesondere Eisen oder Nickel, in Konzentrationen von jeweils < 0,1 Masse-% enthalten. Vorzugsweise beträgt der Gehalt an Palladium, Kupfer, Nickel oder Eisen 0,03 bis 0,05 Masse-%. Der Gehalt an Platin liegt vorzugsweise zwischen 0,05 und 0,1 Masse-%.

Die Erfindung beinhaltet weiterhin das Verfahren zur oxidativen Reinigung von hochprozentigem Kohlendioxid, wie es in der Reinigungsstufe der Synthesegaserzeugung aus schweren Erdölrückständen anfällt, behaftet mit organischen Verbindungen und anderen Verunreinigungen.

Erfindungsgemäß wird das mit oxidierbaren Komponenten verunreinigte Kohlendioxid gemeinsam mit Luft oder Sauerstoff bei Temperaturen zwischen 450 und 540 °C über den vorstehend beschriebenen erfindungsgemäßen Katalysator geleitet. Die Reaktionstemperatur, die Katalysatorbelastung sowie die Wahl der Art und Menge des Oxidationsmittels erfolgen entsprechend den Anforderungen an die Reinheit des Reaktionsproduktes. Die Katalysatorbelastung liegt vorzugsweise bei 5000 v/vh, die Reaktionstemperatur vorzugsweise zwischen 470 und 520 °C.

Unter diesen Bedingungen werden alle organischen Verbindungen, einschließlich der gesättigten Kohlenwasserstoffe, umgesetzt. Der Umsetzungsgrad ist temperaturabhängig und kann entsprechend gezielt eingestellt werden.

Der erfindungsgemäße Katalysator mit seiner hohen Platinoberflächenkonzentration und äußeren Oberfläche besitzt unter den vorgenannten thermischen Bedingungen den Vorteil einer hohen thermischen Stabilität über lange Betriebszeiten. Die Stabilität ist bis zu Temperaturen von 800 °C gewährleistet. Auf Grund dieser Eigenschaften erfolgt die Umsetzung der gesättigten Kohlenwasserstoffe zu 90 bis 99 % sowie die vollständige Umsetzung der übrigen Verunreinigungen. Diese werden im Reaktor hauptsächlich zu Kohlendioxid und Wasserdampf umgewandelt, ohne daß andere störende Nebenprodukte gebildet werden.

Eine Bildung von $NO_x$ wurde nicht festgestellt. Schwefelverbindungen, die im Konzentrationsbereich unter 1 vpm enthalten sind, werden direkt zu Schwefeldioxid umgesetzt. Unter diesen Bedingungen kann deshalb auf die sonst übliche Vorschaltung eines zinkoxidhaltigen Adsorbers zur Adsorption der Schwefelverbindungen verzichtet werden.

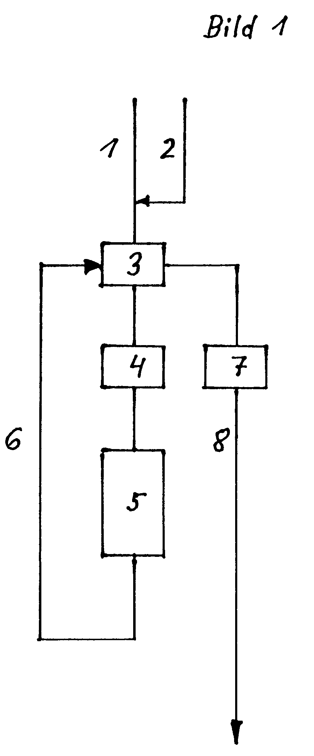

Nachstehend wird das Verfahren an Hand des im Bild 1 dargestellten Schemas beschrieben.

Die verunreinigte Kohlensäure des Stromes 1 wird zunächst mit dem Luft- oder Sauerstoffstrom 2 in der Menge gemischt, daß das Reaktionsprodukt noch 0,1 bis 0,4 Vol-% Sauerstoff enthält.

Das Gasgemisch wird über Wärmetauscher 3 und einen elektrischen Spitzenvorheizer 4 auf die Reaktionstemperatur, vorzugsweise 470 bis 520 °C, erhitzt. Danach wird es direkt dem Reaktor 5 zugeführt, in dem die oxidative Umsetzung der Verunreinigungen, hauptsächlich zu Kohlendioxid und Wasserdampf, erfolgt.

Die Zusammensetzung und Herstellung des Katalysators, Durchführung des Verfahrens und die erhaltenen Ergebnisse sind in den folgenden Beispielen näher erläutert.

Beispiel 1

500 ml Tabletten der Abmessung 5 x 5 mm einer $\alpha$-Tonerde, spezifische Oberfläche 8 $m^2$/g, werden mit einer Lösung aus Hexachloroplatinsäure, Palladiumnitrat und Kupfernitrat, die zuvor auf den pH-Wert 7 abgestumpft wurde, getränkt. Das Verhältnis der Metalle in der Lösung ist folgendes:
Pt : Pd : Cu = 5 : 2 : 1,5.

Nach Abtrocknen und Temperaturbehandlung bei 160 bis 200 °C wird ein Katalysator erhalten, der 0,1 Masse-% Pt, 0,04 Masse-% Pd und 0,03 Masse-% Cu enthält.

Die Oberflächenanreicherung der Aktivkomponenten in der oberen Schicht von 100 $\mu$m Stärke beträgt über 90 %.

Dieser Katalysator Nr. 1 wurde in den nachfolgenden Beispielen verwendet.

Weitere Katalysatorzusammensetzungen sind in der Tabelle 1 enthalten.

Beispiel 2

1750 l/h i.N. eines technischen Kohlendioxidstromes der in der Tabelle 2 angegebenen Spezifikation aus einer Rektisolanlage wurden mit 55 l/h Luft gemischt, aufgeheizt und mit einer Temperatur von 520 °C durch einen elektrisch beheizten Reaktor geleitet. Als Katalysator wurde der im Beispiel 1 beschriebene Katalysator eingesetzt. Das Katalysatorbett hatte ein Volumen von 350 ml.
Nach Abkühlung auf 25 °C wurde das erhaltene Reaktionsprodukt analysiert. Die Zusammensetzung ist in Tabelle 2 angegeben.

Beispiel 3

1750 l/h i.N. des in Tabelle 2 angegebenen Kohlendioxids wurden mit 12 l/h Sauerstoff gemischt und durch die im Beispiel 2 beschriebene Versuchsanlage geleitet, Reaktionstemperatur: 520 °C. Das Reaktionsprodukt hatte die in Tabelle 2 angegebene Zusammensetzung.

Beispiel 4:

1750 l/h i.N. des in Tabelle 2 angegebenen Kohlendioxids wurden, gemischt mit 60 l/h Luft, bei einer Reaktortemperatur von 480 °C durch die im Beispiel 2 beschriebene Versuchsanlage geleitet. Das Reaktionsprodukt hatte die in Tabelle 2 angegebene Zusammensetzung.

Beispiel 5

5000 l/h i.N. des in Tabelle 2 angegebenen Kohlendioxids wurden, gemischt mit 180 l/h Luft, bei einer Reaktortemperatur von 520 °C durch die im Beispiel 2 beschriebene Versuchsanlage geleitet.
Das Reaktionsprodukt hatte die in Tabelle 2 angegebene Zusammensetzung.

Tabelle 1

| Zusammensetzung der Katalysatoren | | | | | |
|---|---|---|---|---|---|
| Katalysator Nr. | 1 | 2 | 3 | 4 | 5 |
| Pt (Masse-%) | 0,1 | 0,05 | 0,1 | 0,1 | 0,05 |
| Pd (Masse-%) | 0,04 | 0,035 | 0,05 | 0,035 | 0,05 |
| Cu (Masse-%) | 0,03 | 0,03 | - | 0,015 | - |
| Fe (Masse-%) | - | | - | - | 0,2 |
| Ni (Masse-%) | - | | 0,05 | - | - |
| spez.Oberfläche ($m^2$/g) | 8 | 15 | 20 | 21 | 19 |
| Form | Tabletten | Tabletten | Tabletten | Ringe | Tabletten |
| geometr. Maße (mm) | 5 x 5 | 5 x 5 | 5 x 5 | 6 x 2 x 6 | 5 x 5 |

Tabelle 2

| Zusammensetzung | | Roh-$CO_2$ | Rein-$CO_2$ | | | | | | | |
|---|---|---|---|---|---|---|---|---|---|---|
| | | | Beisp.: 2 | 3 | 4 | 5 | 2 | 2 | 2 | 2 |
| | | | Kat.: 1 | 1 | 1 | 1 | 2 | 3 | 4 | 5 |
| $CO_2$ | Vol.-% | 99,4 | 97,0 | 99,1 | 96,5 | 96,7 | 96,8 | 96,9 | 96,9 | 97,0 |
| $H_2$ | " | 0,15 | $< 10^{-4}$ | $< 10^{-4}$ | $< 10^{-4}$ | $< 10^{-4}$ | $< 10^{-4}$ | $< 10^{-4}$ | $< 10^{-4}$ | $< 10^{-4}$ |
| $N_2$ + Ar | " | 0,1 | 2,3 | 0,1 | 2,7 | 2,5 | 2,5 | 2,4 | 2,4 | 2,3 |
| $O_2$ | " | - | 0,2 | 0,3 | 0,3 | 0,3 | 0,25 | 0,2 | 0,2 | 0,2 |
| CO | " | 0,15 | $< 10^{-4}$ | $< 10^{-4}$ | $< 10^{-4}$ | $< 10^{-4}$ | $< 10^{-4}$ | $< 10^{-4}$ | $< 10^{-4}$ | $< 10^{-4}$ |
| flücht. KW (ger. als $CH_4$) | mg/kg | 200 bis 250 | 11 | 13 | 46 | 63 | 35 | 16 | 8 | 13 |
| Methanol | mg/kg | 400 bis 700 | < 0,1 | < 0,1 | < 0,1 | < 0,1 | < 0,1 | < 0,1 | < 0,1 | < 0,1 |
| höhere KW | " | 5,0 | < 1 | < 1 | < 1 | < 1 | < 1 | < 1 | < 1 | < 1 |
| oxidierbare Bestandteile ($KMnO_4$-Verbr.) | ml/200 g | 5 bis 10 | < 1 | < 1 | < 1 | < 1 | < 1 | < 1 | < 1 | < 1 |
| Wasser | Vol.-% | - | 0,5 | 0,5 | 0,5 | 0,4 | 0,45 | 0,5 | 0,5 | 0,5 |
| $H_2S$ | mg/kg | < 0,5 | < 0,05 | < 0,05 | < 0,05 | < 0,05 | < 0,05 | < 0,05 | < 0,05 | < 0,05 |
| COS | " | < 0,05 | < 0,05 | < 0,05 | < 0,05 | < 0,05 | < 0,05 | < 0,05 | < 0,05 | < 0,05 |
| $SO_2$ | " | n.n. | < 1 | < 1 | < 1 | < 1 | < 0,1 | < 0,1 | < 0,1 | < 0,1 |
| $NO_x$ | " | n.n. | < 0,02 | < 0,02 | < 0,02 | < 0,02 | < 0,02 | < 0,02 | < 0,02 | < 0,02 |

**Patentansprüche**

1. Katalysator zur oxidativen Reinigung von Kohlendioxid, der Palladium und/oder Platin auf Aluminiumoxid als Träger enthält, dadurch gekennzeichnet, daß der Träger α-Aluminiumoxid mit einer spezifi-

schen Oberfläche < 50 m$^2$/g ist, das Platin in einer Menge < 0,2 Masse-% und ggf. weitere Schwermetalle der 8. Nebengruppe oder Kupfer in einer Menge von jeweils < 0,1 Masse-%, in einer Schichtdicke von 100 $\mu$m peripher auf >0,5 Masse-% angereichert, enthält.

2. Katalysator nach Anspruch 1, dadurch gekennzeichnet, daß das $\alpha$-Aluminiumoxid eine spezifische Oberfläche von 5 bis 25 m$^2$/g aufweist.

3. Katalysator nach Anspruch 1 und 2, dadurch gekennzeichnet, daß er neben Platin Palladium in einer Menge < 0,1 Masse-% und/oder Kupfer oder ein Element der 8. Nebengruppe in einer Menge von < 0,1 Masse-% enthält.

4. Katalysator nach Anspruch 1 bis 3, dadurch gekennzeichnet, daß der Platingehalt 0,05 bis 0,1 Masse-%, der Palladiumgehalt 0,03 bis 0,05 Masse-% und der Gehalt an Kupfer, Eisen oder Nickel 0,03 bis 0,05 Masse-% beträgt.

5. Katalysator nach Anspruch 1 bis 4, dadurch gekennzeichnet, daß die Schwermetallverbindungen durch Fällung aus einer Metallsalzlösung bei pH 6 bis pH 8 peripher auf dem $\alpha$-Aluminiumoxidträger angereichert sind.

6. Verfahren zur oxidativen Reinigung von Kohlendioxid mittels Luft oder Sauerstoff an einem Palladium und/oder Platin auf Aluminiumoxid als Träger enthaltenden Katalysator, dadurch gekennzeichnet, daß das Verfahren bei Temperaturen von 450 bis 540 °C an einem Katalysator durchgeführt wird, dessen Träger $\alpha$-Aluminiumoxid mit einer spezifischen Oberfläche < 50 m°/g ist, und der Platin in einer Menge von < 0,2 Masse-% und ggf. weitere Schwermetalle der 8. Nebengruppe oder Kupfer in einer Menge von jeweils < 0,1 Masse-% peripher angereichert in einer Schichtdicke von 100 $\mu$m auf >0,5 Masse-%, enthält.

7. Verfahren nach Anspruch 6, dadurch gekennzeichnet, daß ein Katalysator eingesetzt wird, dessen $\alpha$-Aluminiumoxid eine spezifische Oberfläche von 5 bis 25 m$^2$/g besitzt.

8. Verfahren nach Anspruch 6 und 7, dadurch gekennzeichnet, daß ein Katalysator eingesetzt wird, der neben Platin, Palladium in einer Menge < 0,1 Masse-% und/oder Kupfer oder ein Element der 8. Nebengruppe des PSE in einer Menge von < 0,1 Masse-% enthält.

9. Verfahren nach Anspruch 6 bis 8, dadurch gekennzeichnet, daß ein Katalysator eingesetzt wird, dessen Platingehalt 0,05 bis 0,1 Masse-%, dessen Palladiumgehalt 0,03 bis 0,05 Masse-% und dessen Kupfergehalt 0,03 bis 0,05 Masse-% beträgt.

10. Verfahren nach Anspruch 6 bis 9, dadurch gekennzeichnet, daß die Temperatur zwischen 470 und 520 °C liegt und eine Durchsatzleistung von 5000 v/vh eingestellt wird.

Bild 1

Europäisches
Patentamt

**EUROPÄISCHER RECHERCHENBERICHT**

Nummer der Anmeldung

EP 94 10 1789

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-23 04 351 (KALI-CHEMIE AG)<br><br>* Ansprüche 1,6,8-11,14; Beispiele 1-8 *<br>--- | 1,3,5,6,8 | C01B31/20<br>B01D53/36<br>B01J23/89 |
| A | US-A-4 200 552 (NOGUCHI ET AL.)<br>* Ansprüche 1-12; Tabelle 2 *<br>--- | 1,2,6,7 | |
| D,A | DD-A-240 672 (VEB LEUNA-WERKE)<br>* das ganze Dokument *<br>--- | 1-10 | |
| A | EP-A-0 147 751 (SÜD-CHEMIE)<br>* Ansprüche 1-15; Beispiele 1,2 *<br>--- | 1-10 | |
| A | WO-A-90 05579 (JOHNSON MATTHEY INC.)<br>* Seite 5 - Seite 6; Beispiele 1-6 *<br>--- | 1,3,6 | |
| A | EP-A-0 222 497 (GENERAL MOTORS CORPORATION)<br>----- | 1,3,6 | |

| | RECHERCHIERTE SACHGEBIETE (Int.Cl.5) |
|---|---|
| | C01B<br>B01D<br>B01J |

Der vorliegende Recherchenbericht wurde für alle Patentansprüche erstellt

| Recherchenort | Abschlußdatum der Recherche | Prüfer |
|---|---|---|
| DEN HAAG | 18. Mai 1994 | Cubas Alcaraz, J |